## Europäisches Patentamt

## European Patent Office

## Office européen des brevets

(19)

(11) Publication number: **0 225 406**
**B1**

(12)

# EUROPEAN PATENT SPECIFICATION

(45) Date of publication of the patent specification:
**07.03.90**

(51) Int. Cl.⁴: **B23K 35/363**

(21) Application number: **85308727.8**

(22) Date of filing: **29.11.85**

(54) Method of brazing aluminium or aluminium alloy parts.

(43) Date of publication of application:
**16.06.87 Bulletin 87/25**

(45) Publication of the grant of the patent:
**07.03.90 Bulletin 90/10**

(84) Designated Contracting States:
**DE FR GB**

(56) References cited:
**DE-C- 806 398**
**FR-A- 973 206**
**GB-A- 217 880**
**GB-A- 231 816**
**GB-A- 264 238**
**US-A- 1 968 984**
**US-A- 2 809 423**

**Klein: Einführung in die DIN-NORMEN, (1970) p.417.**

(73) Proprietor: **Kanto Yakin Kogyo Kabushiki Kaisha,
2543 Shinomiya, Hiratsuka-shi Kanagawa-ken(JP)**

(72) Inventor: **Takahashi, Susumu, 236-50, Fujizuki,
Hodogaya-ku Yokohama(JP)**

(74) Representative: **Whalley, Kevin et al, MARKS &
CLERK 57/60 Lincoln's Inn Fields, London
WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of brazing aluminium or aluminium alloy parts, i.e. a brazing method for joining components parts of aluminium or alloys thereof.

Fluxes presently employed for joining aluminium parts with a brazing metal may be classified into two groups, viz., those which are soluble in water and those which are insoluble in water. A water-soluble flux is generally made from a mixture of chlorides such as chlorides of alkali metals or alkaline earth metals, while a water-insoluble flux is usually a fluoride such as a fluoroamine-potassium-complex. Almost all of the water-soluble fluxes which are made from chlorides are deliquescent, and when they become moist, they have severe corrosive actions against aluminium materials and brazing apparatuses. On the other hand, residues of fluxes containing fluorides which have adhered to surfaces of aluminium parts after brazing, can be removed by washing only with difficulty.

For example, in a conventional water-solute flux which is made from a mixture of chlorides such as NaCl, KCl, LiCl, $ZnCl_2$, $CaCl_2$, and fluorides are extremely deliquescent. When such a flux is applied to a brazing sheet, and heated in a furnace, it is decomposed and evaporates as indicated in the following formula, whereby its efficiency as a flux considerably decreases

$$ZnCl_2 + H_2O \rightarrow ZnO + HCl$$

Meanwhile, the flux which has evaporated adheres to the furnace and its fixtures and jigs, absorbs moisture, and corrodes them. This means that it is inappropriate to carry out a brazing operation with the employment of a deliquescent flux under an atmosphere having a low oxygen content and a low dew point such as one having an oxygen content lower than 50 ppm and a dew point lower than -50°C, since the flux itself is hygroscopic. Therefore, the operation is generally conducted under atmospheric conditions. Since such conditions cannot be relied on to prevent the oxidation of component parts of aluminium or alloys thereof, an excessive amount of flux has to be used for the brazing operation in order to remove metal oxides produced during the operation. Further, residues of flux which have adhered to the components have to be thoroughly washed out, since they are corrosive against the components in the presence of moisture.

The aforementioned water-insoluble fluxes have been developed so that it is not required to remove them after brazing. They are mixtures of $KAlF_4$ and $K_3AlF_6$ which are insoluble in water even after brazing, and are not corrosive even in the presence of moisture. However, this kind of flux has a drawback that its residues adhere firmly onto aluminium components after brazing, and they can be removed only with difficulty. In particular, when the components are to be subjected to a surface treatment after having been brazed, the residues become barriers to the treatment. Also, when brazed aluminium components are employed in processing food, scattering of flux residues into the food is unavoidable, though this should be completely prevented.

Attention is also drawn to the disclosures of DE-C 806 398, US-A 2 809 423, and Klein: Einführung in die DIN-Normen (1970) page 417, Tabelle 417.1. Hartlote (4).

The present invention in one aspect provides a method of brazing aluminium or aluminium alloy parts, comprising the steps of applying onto the parts to be joined a non-deliquescent flux having a melting point of 540-560°C and being made from an eutectic of 55-47 weight % of $BaCl_2$, 18-22 weight % of NaCl, and 27-33 weight % of KCl, to which is added 1-20 weight % of one or more fluorides, and heating the parts to a temperature higher than 540°C in the presence of brazing material(s) having melting point of 561-580°C and being at said parts so that the brazing material(s) at the parts melt and join in conjunction with the flux after said flux melts, and wherein the flux is applied to the said parts after mixing it with a solvent which does not contain water, and the method is carried under an atmosphere having an oxygen content lower than 50 ppm and a dew point lower than -50°C.

The invention in another aspect provides a method of brazing aluminium or aluminium alloy parts, comprising the steps of applying onto the parts to be joined a non-deliquescent flux having a melting point of 540-560°C and being made from an eutectic of 55-47 weight % of $BaCl_2$, 18-22 weight % of NaCl, and 27-33 weight % of KCl, to which is added 1-20 weight % of one or more fluorides, and heating the parts to a temperature higher than 540°C in the presence of brazing material(s) having melting point of 561-580°C and being at said parts so that the brazing material(s) at the parts melt and join in conjunction with the flux after said flux melts, and wherein said fluoride(s) is water-insoluble and the flux is applied to the said parts after mixing it with water or with a solvent containing water, and the method is carried under an atmosphere having an oxygen content lower than 50 ppm and a dew point lower than -50°C.

Preferably there is applied onto the parts to be joined a non-deliquescent flux having a melting point of about 540°C and consisting of about 54.7 weight % of $BaCl_2$, about 18 weight % of NaCl, and about 27.3 weight % of KCl, to which is added 1-20 weight % of one or more fluorides, and the parts are heated to a temperature higher than 540°C in the presence of brazing material(s) of an Al-Si alloy system and having a melting point of 561-580°C.

The invention in a further aspect provides a method of brazing aluminium or aluminium alloy parts, comprising the steps of applying onto the parts to be joined a non-deliquescent flux having a melting point of about 540°C and consisting of about 54.7 weight % of $BaCl_2$, about 18 weight % of NaCl, and about 27.3 weight % of KCl, to which is added 1-20 weight % of one or more fluorides, and heating the parts to a temperature higher than 540°C in the presence of brazing material(s) of an Al-Si system and having a melting point of 561-580°C and being at said parts so that the brazing material(s) at the parts melt and join in conjunction with the flux after said flux melts; and wherein the method is carried out under an atmosphere having an oxygen content lower than 50 ppm and a dew point lower than -50°C.

This invention therefore provides a brazing method for joining component parts of aluminium or alloys thereof, wherein a flux which has been left on the parts after brazing can be readily removed by washing for example, wherein the flux and its residues are not deliquescent, and wherein the brazing operation can be conducted under an atmosphere having a low oxygen content and a low dew point, effectively preventing the oxidation of the component parts.

More specifically, the method in accordance with the invention employs as a flux, an eutectic mixture of $BaCl_2$, NaCl, and KCl, which is not deliquescent and which is activated by the addition of one or more fluorides thereto. The invention also relates to a method of applying said specific flux in conjunction with a specific atmosphere.

The eutectic point of $BaCl_2$ 54.7%, NaCl 18.0 %, and KCl 27.3 % is 540°C, which temperature seems appropriate for brazing aluminium or aluminium alloy component parts, the brazing temperature of which is usually 580-615°C, and in which aluminium hard solders employed are generally Al-Si systems having a melting point of 561-580°C. Although the above-mentioned eutectic mixture or alloy is therefore good as a flux as it is, one or more fluorides are added thereto in order to make it chemically more active. Even when fluorides are added in an amount of 1-20 weight %, increase of the melting point of the mixture is only about 20°C. That is, the melting point of the eutectic mixture or alloy is limited to 560°C which is still appropriate for the intended brazing in accordance with this invention. This means that the mixing ratio of constituents of said mixture may be varied, taking into consideration increase of its melting temperature by the addition of fluorides, viz., about 10-15°C. The mixing ratio is 55-47 weight % for $BaCl_2$, 18-22 % for NaCl, and 27-33 % for KCl.

It shall be noted that a mixture or eutectic alloy of $BaCl_2$, NaCl, and KCl is not deliquescent, and that a flux made from said mixture with the addition of one or more fluorides is also not deliquescent.

In practice, a flux employed in the method in accordance with this invention is preferably made as a fine powder of size less than 50 µ.. The powder is prepared as a suspension of a desired density by the addition of a solvent, and then applied to aluminium parts to be brazed. The solvent is one which does not contain water when a water-soluble fluoride is used, since such fluoride reacts with an eutectic mixture of $BaCl_2$, NaCl, and KCl, and changes the composition of the mixture. When the fluoride is water-insoluble, the solvent may contain water or may be water.

In view of the fact that aluminium or alloys thereof easily form chemically strong oxidized surface films on account of oxygen or steam even under a comparatively low temperature, and that such films lower brazing efficiencies, the method in accordance with this invention which can be carried under an atmosphere of low oxygen content and a low dew point is very advantageous.

It is also very advantageous in this invention that a minimum amount of flux is required.

The invention will be further described with reference to the following illustrative Examples.

Example 1.

An eutectic base of $BaCl_2$, NaCl, and KCl in mixing ratios by weight of 54.7, 18.0, 23.3 % was ground to obtain a powder of size less than 50 µ. To this powder, there was added 10 weight % of $ZnF_2$ to obtain a flux. This flux was made into a suspension by adding thereto a solvent which does not contain water, viz., perchloro-ethylene or xylene at a ratio of 1,000 ml per 50 g of the flux. The flux thus prepared as a suspension was sprayed onto brazing portions of aluminium component parts, and dried at 200°C. The parts were subjected to a brazing operation in a furnace of $N_2$ atmosphere, the oxygen content of which was less than 10 ppm, and the dew point of which was less than -50°C. The parts were kept in the furnace for about 4 minutes at 600-610°C, cooled down to less than 400°C in the furnace and then drawn out from the furnace to the air. The brazing produced fillets which were sufficient to ensure strong joints. Flux residues of little amount were removed easily by washing them in warm water at about 70°C.

Example 2.

A eutectic powder similar to that employed in Example 1 was added with 10 weight % of $CaF_2$, a water-insoluble fluoride. The powder was added with water at a ratio of 1,000 ml per 50 g to obtain a flux suspension. The suspension was sprayed onto aluminium alloy parts in exactly the same manner as in Example 1, and dried at 300°C. The parts were subjected to a brazing operation, similarly to Example 1. Reliable joints were obtained, and flux residues on and about the joints were easily removed by washing them in warm water at 70°C.

Example 3.

In experiments conducted under the conditions of Example 1 or 2 and with the addition of other fluorides to the eutectics, brazing efficiencies were compared with each other with respect to joints obtained and easiness of removal of the flux residues. The following results were obtained.
Excellent: $ZnF_2$, $CaF_2$, $MgF_2$, $AlF_2$, LiF;
Better: NaF, $NiF_2$, $BaF_2$;
Good: $CrF_2$, $MnF_2$, CuF, KF.

**Claims**

1. A method of brazing aluminium or aluminium alloy parts, comprising the steps of applying onto the parts to be joined a non-deliquescent flux having a melting point of 540-560°C and being made from an eutectic of 55-47 weight % of $BaCl_2$, 18-22 weight % of NaCl, and 27-33 weight % of KCl, to which is added 1-20 weight % of one or more fluorides, and heating the parts to a temperature higher than 540°C in the presence of brazing material(s) having melting point of 561-580°C and being at said parts so that the brazing material(s) at the parts melt and join in conjunction with the flux after said flux melts, and wherein the flux is applied to the said parts after mixing it with a solvent which does not contain water, and the method is carried under an atmosphere having an oxygen content lower than 50 ppm and a dew point lower than -50°C.

2. A method of brazing aluminium or aluminium alloy parts, comprising the steps of applying onto the parts to be joined a non-deliquescent flux having a melting point of 540-560°C and being made from an eutectic of 55-47 weight % of $BaCl_2$, 18-22 weight % of NaCl, and 27-33 weight % of KCl, to which is added 1-20 weight % of one or more fluorides, and heating the parts to a temperature higher than 540°C in the presence of brazing material(s) having melting point of 561-580°C and being at said parts so that the brazing material(s) at the parts melt and join in conjunction with the flux after said flux melts, and wherein said fluoride(s) is water-insoluble and the flux is applied to the said parts after mixing it with water or with a solvent containing water, and the method is carried under an atmosphere having an oxygen content lower than 50 ppm and a dew point lower than -50°C.

3. A method as claimed in claim 1 or 2, characterized by applying onto the parts to be joined a non-deliquescent flux having a melting point of about 540°C and consisting of about 54.7 weight % of $BaCl_2$, about 18 weight % of NaCl, and about 27.3 weight % of KCl, to which is added 1-20 weight % of one or more fluorides, and by heating the parts to a temperature higher than 540°C in the presence of brazing material(s) of an Al-Si alloy system and having a melting point of 561-580°C.

4. A method of brazing aluminium or aluminium alloy parts, comprising the steps of applying onto the parts to be joined a non-deliquescent flux having a melting point of about 540°C and consisting of about 54.7 weight % of $BaCl_2$, about 18 weight % of NaCl. and about 27.3 weight % of Cl, to which is added 1-20 weight % of one or more fluorides, and heating the parts to a temperature higher than 540°C in the presence of brazing material(s) of an Al-Si system and having a melting point of 561-580°C and being at said parts so that the brazing material(s) at the parts melt and join in conjunction with the flux after said flux melts, and wherein the method is carried out under an atmosphere having an oxygen content lower than 50 ppm and a dew point lower than -50°C.

**Patentansprüche**

1. Verfahren zum Löten von Aluminium- oder Aluminiumlegierungsteilen, umfassend die Stufen des Aufbringens auf die zu verbindenden Teile eines nicht zerfließenden Flußmittels mit einem Schmelzpunkt von 540-560°C, das aus einem Eutektikum aus 55-47 Gew.-% $BaCl_2$, 18-22 Gew.-% NaCl und 27-33 Gew.-% KCl, dem 1-20 Gew.-% eines oder mehrerer Fluoride zugegeben werden, hergestellt ist, und des Erhitzens der Teile auf eine Temperatur von höher als 540°C in Gegenwart von Lötmaterial(ien) mit einem Schmelzpunkt von 561-580°C, das (die) sich an den Teilen befindet (befinden), so daß das (die) Lötmaterial(ien) an den Teilen schmelzen und sich in Verbindung mit dem Flußmittel, nachdem das Flußmittel schmilzt, verbinden, und wobei das Flußmittel auf die Teile aufgebracht wird, nachdem es mit einem Lösungsmittel, das kein Wasser enthält, vermischt worden ist, und wobei das Verfahren unter einer Atmosphäre mit einem Sauerstoffgehalt von weniger als 50 ppm und einem Taupunkt von weniger als -50°C durchgeführt wird.

2. Verfahren zum Löten von Aluminium- oder Aluminiumlegierungsteilen, umfassen die Stufen des Aufbringens auf die zu verbindenden Teile eines nicht zerfließenden Flußmittels mit einem Schmelzpunkt von 540-560°C, das aus einem Eutektikum aus 55-47 Gew.-% $BaCl_2$, 18-22 Gew.-% NaCl und 27-33 Gew.-% KCl, dem 1-20 Gew.-% eines oder mehrerer Fluoride zugegeben werden, hergestellt ist, und des Erhitzens der Teile auf eine Temperatur von höher als 540°C in Gegenwart von Lötmaterial(ien) mit einem Schmelzpunkt von 561-580°C, das (die) sich an den Teilen befindet (befinden), so daß das (die) Lötmaterial(ien) an den Teilen schmelzen und sich in Verbindung mit dem Flußmittel, nachdem das Flußmittel schmilzt, verbinden, und wobei das (die) (Fluorid(e) wasserunlöslich ist (sind) und das Flußmittel auf die Teile aufgebracht wird, nachdem es mit Wasser oder mit einem Wasser enthaltenden Lösungsmittel vermischt worden ist, und wobei das Verfahren unter einer Atmosphäre mit einem Sauerstoffgehalt von weniger als 50 ppm und einem Taupunkt von weniger als -50°C durchgeführt wird.

3. Verfahren nach Anspruch 1 oder 2, dadurch gekennzeichnet, daß auf die zu verbindenden Teile ein nicht zerfließendes Flußmittel aufgebracht wird mit einem Schmelzpunkt von etwa 540°C, das aus etwa 54,7 Gew.-% $BaCl_2$, etwa 18 Gew.-% NaCl und etwa 27,3 Gew.-% KCl, dem 1-20 Gew.-% eines oder mehrerer Fluoride zugegeben werden, besteht, und daß die Teile auf eine Temperatur von höher als 540°C in Gegenwart von Lötmaterial(ien) eines Al-Si-Legierungssystems mit einem Schmelzpunkt von 561-580°C erhitzt werden.

4. Verfahren zum Löten von Aluminium- oder Aluminiumlegierungsteilen, umfassend die Stufen des Aufbringens auf die zu verbindenden Teile eines nicht zerfließenden Flußmittels mit einem Schmelzpunkt von etwa 540°C, das aus etwa 54,7 Gew.-% $BaCl_2$, etwa 18 Gew.-% NaCl und etwa 27,3 Gew.-% KCl, dem 1-20 Gew.-% eines oder mehrerer Fluoride zugegeben werden, besteht, und des Erhitzens der Teile lauf eine Temperatur von höher als 540°C in Gegenwart von Lötmaterial(ien) eines Al-Si-Systems mit einem Schmelzpunkt von 561-580°C, das (die) sich an den Teilen befindet (befinden), so daß das (die) Lötmaterial(ien) an den Teilen schmelzen und sich in Verbindung mit dem Flußmittel, nachdem das Flußmittel schmilzt, verbinden, und wobei das Verfahren unter einer Atmosphäre mit einem Sauerstoffgehalt von weniger als 50 ppm und einem Taupunkt von weniger als -50°C durchgeführt wird.

## Revendications

1. Procédé de brasage de pièces d'aluminium ou d'alliage d'aluminium comprenant les étapes d'application aux pièces à réunir d'un flux non déliquescent ayant un point de fusion de 540-560°C et étant fait d'un eutectique de 55-47 % en poids de $BaCl_2$, de 18-22 % en poids de NaCl et de 27-33 % en poids de KCl, auquel sont ajoutés 1 à 20 % en poids d'un ou plusieurs fluorures, et de chauffage des pièces à une température supérieure à 540°C en présence d'une ou plusieurs matières de brasage ayant un point de fusion de 561-580°C et étant au contact desdites pièces de façon à ce que la ou les matières de brasage au niveau des pièces fondent et se réunissent avec le flux après fusion dudit flux, et dans lequel le flux est appliqué auxdites pièces après avoir été mélangé avec un solvant qui ne contient pas d'eau, le procédé étant réalisé sous une atmosphère ayant une teneur en oxygène inférieure à 50 ppm et un point de rosée inférieur à -50°C.

2. Procédé de brasage de pièces d'aluminium ou d'alliage d'aluminium comprenant les étapes d'application aux pièces à réunir d'un flux non déliquescent ayant un point de fusion de 540-560°C et étant fait d'un eutectique de 55-47 % en poids de $BaCl_2$, de 18-22 % en poids de NaCl et de 27-33 % en poids de KCl, auquel sont ajoutés 1 à 20 % en poids d'un ou plusieurs fluorures, et de chauffage des pièces à une température supérieure à 540°C en présence d'une ou plusieurs matières de brasage ayant un point de fusion de 561-580°C et étant au contact desdites pièces de façon à ce que la ou les matières de brasage au niveau des pièces fondent et se réunissent avec le flux après fusion dudit flux, et dans lequel le ou lesdits fluorures sont insolubles dans l'eau et le flux est appliqué auxdites pièces après mélange avec de l'eau ou avec un solvant contenant de l'eau, et le procédé est réalisé sous une atmosphère ayant une teneur en oxygène inférieure à 50 ppm et un point de rosée inférieur à -50°C.

3. Procédé selon la revendication 1 ou 2, caractérisé par l'application aux pièces à réunir d'un flux non déliquescent ayant un point de fusion d'environ 540°C et constitué d'environ 54,7 % en poids de $BaCl_2$, environ 18 % en poids de NaCl et environ 27,3 % en poids de KCl, auquel sont ajoutés 1 à 20 % en poids d'un ou plusieurs fluorures, et par le chauffage des pièces à une température supérieure à 540°C en présence d'une ou plusieurs matières de brasage faites d'un système d'alliage Al-Si et ayant un point de fusion de 561-580°C.

4. Procédé de brasage de pièces d'aluminium ou d'alliage d'aluminium comprenant les stades d'application aux pièces à réunir d'un flux non déliquescent ayant un point de fusion d'environ 540°C et constitué d'environ 54,7 % en poids de $BaCl_2$, environ 18 % en poids de NaCl et environ 27,3 % en poids de KCl, auquel sont ajoutés 1 à 20 % en poids d'un ou plusieurs fluorures, et de chauffage des pièces à une température supérieure à 540°C, en présence d'une ou plusieurs matières de brasage faites d'un système d'alliage Al-Si et ayant un point de fusion de 561-580°C et étant présentes au niveau desdites pièces de façon à ce que la ou les matières de brasage au niveau des pièces fondent et se réunissent avec le flux après que ledit flux ait fondu, ce procédé étant réalisé sous une atmosphère ayant une teneur en oxygène inférieure à 50 ppm et un point de rosée inférieur à -50°C.